# FASCICULE DE BREVET EUROPEEN

(11) **EP 2 989 007 B1**
(45) Date de publication et mention de la délivrance du brevet: **15.11.2017**
(21) Numéro de dépôt: 14727583.8
(22) Date de dépôt: 22.04.2014
(51) Int. Cl.: B64D 41/00, F01D 15/10, H02J 4/00, H02J 7/14, H02J 7/34, H02P 9/00, H02P 9/48, H02K 7/18

(54) **DISPOSITIF DE DELESTAGE DES ALTERNATEURS D'UNE TURBOMACHINE PENDANT SES ACCELERATIONS**
ZUR VORRICHTUNG ZUR STROMABSCHALTUNG DER WECHSELSTROMGENERATOREN EINES TURBINENMOTORS WÄHREND DER BESCHLEUNIGUNG
DEVICE FOR CUTTING-OFF OF POWER TO THE ALTERNATORS OF A TURBINE ENGINE DURING ACCELERATION

(30) Priorité: 22.04.2013 FR 1353659
(43) Date de publication de la demande: 02.03.2016
(73) Titulaire: Safran Aircraft Engines, 75015 Paris (FR)
(72) Inventeur: LEBRUN, Arnaud, F-77550 Moissy-Cramayel Cedex (FR); LEPAGE, Thomas, F-77550 Moissy-Cramayel Cedex (FR); MCGRATH, Darragh, F-77550 Moissy-Cramayel Cedex (FR)
(74) Mandataire: Gevers & Orès
(86) Numéro de dépôt international: PCT/FR2014/050977
(87) Numéro de publication internationale: WO 2014/174207

(56) Documents cités:
- WO-A1-99/00884
- WO-A1-2012/012482
- WO-A1-2013/029085
- US-A1- 2010 109 581

## Description

Le domaine de la présente invention est celui des turbomachines et, en particulier, celui des systèmes de fourniture de puissance aux équipements de l'aéronef sur lequel ils sont montés.

L'alimentation électrique des équipements d'un aéronef, hors phase de démarrage, est classiquement assurée par un prélèvement de puissance sur le ou les moteurs qui assurent sa propulsion. Celle-ci est générée par des générateurs dénommés couramment VFG (pour Variable Frequency Generator ou générateurs à fréquence variable) ou IDG (pour Integrated Drive Generator ou générateurs à vitesse constante) qui sont entraînés mécaniquement par un arbre engrenant sur un des rotors de la turbomachine. Ce prélèvement de puissance a un impact sur le fonctionnement thermodynamique de la machine et il est souhaitable d'optimiser la génération de puissance électrique globale de l'aéronef pour optimiser le dimensionnement de la turbomachine.

La tendance sur les avions récents va, d'une part, vers une diminution de la taille des corps haute pression des turboréacteurs, pour augmenter le taux de dilution et le rendement propulsif, sans en augmenter le diamètre total, et, d'autre part, vers une augmentation des besoins électriques. Ceux-ci proviennent notamment du passage d'une alimentation pneumatique de diverses fonctions (dégivrage des entrées d'air, des ailes ou de l'empennage, conditionnement cabine, etc.) à une alimentation électrique de ces mêmes fonctions.

Il en résulte une augmentation de la puissance mécanique à fournir au système de génération électrique relativement à la puissance totale fournie par les turbines haute pression (HP) des turboréacteurs. Mais une augmentation du prélèvement mécanique sur l'arbre HP pour alimenter des générateurs entraînerait une augmentation du besoin de marge au pompage du compresseur HP. Il est souhaitable de trouver des moyens autres de fourniture de la puissance électrique demandée par l'aéronef, notamment lors des variations de régime, au cours desquels le point de fonctionnement de la turbomachine se rapproche le plus de la ligne de pompage du compresseur haute pression.

La présente invention a pour but de remédier à ces inconvénients en proposant une gestion optimisée de la fourniture d'énergie électrique au niveau d'un aéronef.

A cet effet, l'invention a pour objet un système de génération électrique pour l'alimentation en courant d'au moins un équipement pour un aéronef propulsé par une turbomachine, comprenant au moins une capacité de stockage d'énergie électrique, au moins un générateur de courant conformé pour être entraîné mécaniquement par un arbre de rotation de la turbomachine et des liaisons électriques entre ladite capacité de stockage, ledit générateur et des équipements de l'aéronef pour alimenter lesdits équipements en courant comprenant au moins un moyen alternatif de fourniture de courant continu auxdits équipements, autonome vis-à-vis de tout entraînement mécanique par un arbre de rotation de la turbomachine, et un dispositif de délestage apte à délester le ou lesdits générateurs et à mettre simultanément en service ledit moyen alternatif, caractérisé en ce que ledit dispositif de délestage est commandé par un paramètre de commande ou de fonctionnement de la turbomachine.

En particulier le dispositif de délestage est activé par une commande d'augmentation du régime de la turbomachine

Le délestage des générateurs, c'est-à-dire la mise à l'arrêt de leur fourniture de puissance électrique, élimine le prélèvement de puissance mécanique qu'ils opèrent en fonctionnement normal, sur l'arbre de rotation de la turbomachine et permet d'effectuer des augmentations du régime de la turbomachine avec une marge au pompage pour le compresseur optimisée. La fourniture de puissance est alors assurée par les moyens alternatifs de fourniture de courant qui prennent le relais pour alimenter les équipements de l'avion (ou du moteur) pendant cette période de délestage.

De façon préférentielle, le dispositif de délestage active ledit délestage et ladite mise en service alternative au cours d'une variation à la hausse de la vitesse de rotation de la turbomachine, la hausse de vitesse de rotation étant supérieure à une valeur prédéfinie. Ladite valeur, à partir de laquelle agit le dispositif de délestage, est choisie en fonction des besoins en marge au pompage lors d'une accélération du régime.

Avantageusement, ladite accélération est une accélération entre le régime de ralenti et le plein gaz.

Dans un mode particulier de réalisation, le moyen alternatif est un dispositif de stockage d'énergie électrique connecté à un bus de distribution de courant continu au travers d'un interrupteur.

Avantageusement, le dispositif de stockage est formé par au moins un super-condensateur. Ce type de dispositif présente l'avantage de fournir une densité de courant importante associée à des durées de décharge faibles.

Préférentiellement, ledit dispositif de délestage est conformé pour faire fonctionner, sur demande, le ou lesdits générateurs au-delà de leur fonctionnement nominal pour assurer le rechargement dudit dispositif de stockage.

De façon plus préférentielle, ledit générateur fonctionne à un régime égal à 120% de sa valeur nominale dès l'arrêt de la mise en service dudit moyen alternatif de fourniture de courant continu. Et de façon encore plus préférentielle, ledit générateur fonctionne à un régime égal à 150% de sa valeur nominale pendant une durée inférieure à 30 secondes.

L'invention préconise ainsi d'utiliser les marges en surrégime admissibles pour les générateurs à fréquence variable ou à vitesse constante, pour effectuer un rechargement en vol des super-condensateurs ou des dispositifs équivalents.

L'invention porte également sur une turbomachine équipée d'un système de génération électrique tel que décrit ci-dessus.

Dans un mode particulier de réalisation de cette turbomachine, la capacité dudit moyen alternatif et le fonctionnement en surrégime dudit générateur sont dimensionnés pour assurer en séquence deux cycles de fourniture de courant par ledit moyen alternatif et de rechargement par ledit générateur, lesdits deux cycles correspondant à une accélération du ralenti au plein gaz suivie immédiatement par une décélération du plein gaz au ralenti, les taux d'accélération et de décélération étant égaux aux taux maximum autorisés par la régulation.

L'invention sera mieux comprise, et d'autres détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'un circuit électrique d'un aéronef, selon l'art antérieur ;
- la figure 2 est une vue schématique d'un circuit électrique d'un aéronef, selon un mode de réalisation de l'invention ;
- la figure 3 est un schéma de commande du circuit électrique de la figure 2, et
- la figure 4 est un schéma donnant l'évolution de la fourniture de puissance électrique par les divers équipements au cours d'évolutions du régime.

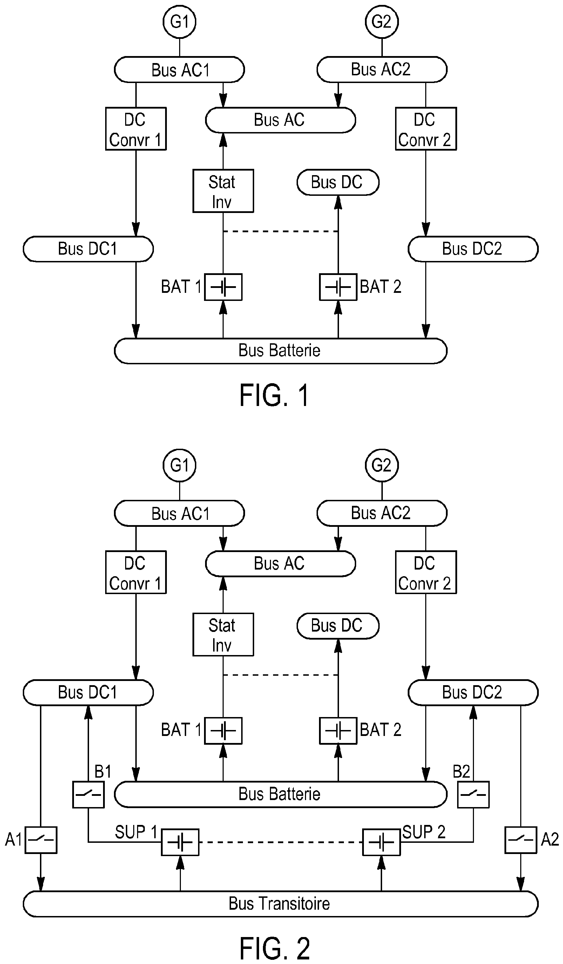

En se référant à la figure 1, on voit le circuit électrique traditionnel d'un aéronef, tel qu'un avion de ligne biréacteur. Chaque moteur entraîne un générateur à fréquence variable, référencé respectivement G1 et G2, qui délivre un courant alternatif qui est ensuite distribué sur l'avion par l'intermédiaire d'un bus alternatif Bus AC 1 et Bus AC 2. Ces deux bus viennent alimenter un bus alternatif unique Bus AC, sur lequel sont branchés les différents équipements de l'avion qui sont consommateurs de puissance électrique sous sa forme alternative.

Par ailleurs, l'avion possède deux batteries BAT 1 et BAT 2 qui alimentent un bus électrique en courant continu, dénommé ici Bus DC, sur lequel sont branchés les différents équipements de l'avion qui sont, eux, consommateurs d'énergie électrique sous sa forme continue. Par ailleurs, un convertisseur courant continu/courant alternatif Stat Inv permet aux batteries BAT 1, BAT 2 d'alimenter le Bus AC en courant alternatif.

Pour recharger ces batteries, les générateurs G1 et G2 entraînent des convertisseurs en courant continu, DC Conv 1 et DC Conv 2, qui débitent du courant continu sur des bus continus, dits Bus DC 1 et Bus DC 2. Ces deux bus DC 1, DC 2 sont ensuite reliés à un bus unique, dénommé ici Bus Batterie, qui transmet l'énergie reçue aux deux batteries pour assurer leur rechargement.

La figure 2 montre le même circuit électrique auquel ont été ajoutés des éléments pour réaliser l'invention. Deux sources supplémentaires d'énergie, associées chacune à un des moteurs, ont été ajoutées, qui sont réalisées sous la forme de deux super-condensateurs, ou batteries à grande capacité, SUP 1 et SUP 2. Un avantage à l'utilisation de super-condensateur est la durée de vie élevée de ces derniers : ils peuvent supporter un fort nombre de cycles d'utilisation compatibles avec une utilisation aéronautique embarquée. Ceux-ci sont reliés au bus continu Bus DC1 ou Bus DC2 du moteur correspondant, au travers d'un interrupteur, dit interrupteur de transitoire, B1 et respectivement B2. La fermeture de ces interrupteurs, dans le cas d'une demande ponctuelle de supplément de puissance électrique, conduit à décharger l'énergie stockée dans les super-condensateurs tout d'abord dans les bus continus DC1 et DC2, puis dans le Bus Batterie où elle vient complémenter les batteries BAT 1 et BAT 2 pour la délivrance d'énergie, via le Bus DC, aux équipements qui utilisent du courant continu.

La recharge des super-condensateurs s'effectue par prélèvement du courant présent sur les bus continus DC1 et DC2 lorsque la demande en supplément de puissance est terminée, pour alimenter un bus spécifique au rechargement, dénommé ici Bus Transitoire, auquel les super-condensateurs SUP 1 et SUP 2 sont connectés. Deux interrupteurs, dits interrupteurs de rechargement, A1 et respectivement A2, sont placés à cet effet entre, respectivement les bus continus DC1 et DC2, et le bus Transitoire pour autoriser ce rechargement.

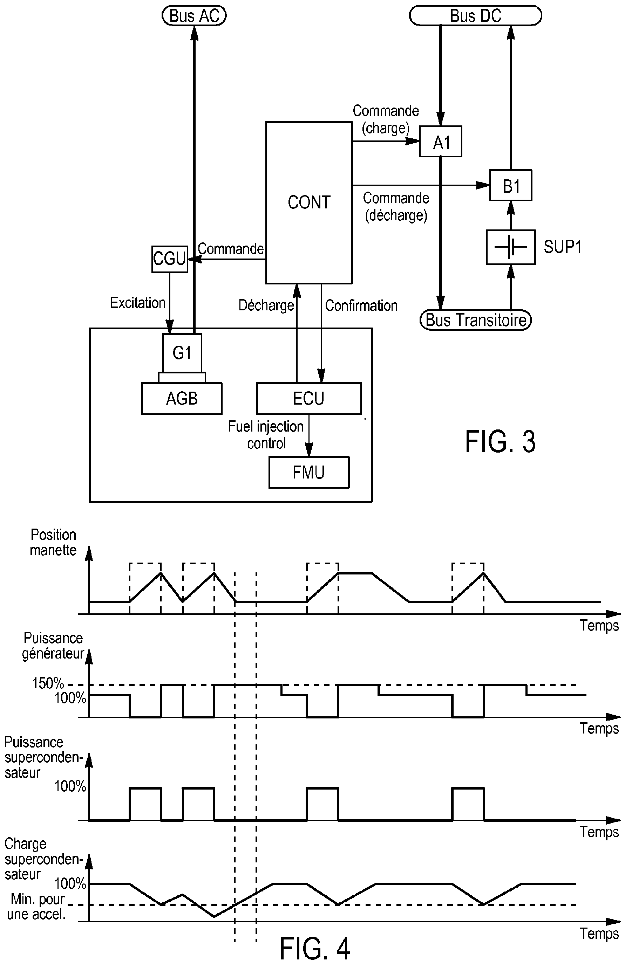

La figure 3 montre le système, selon l'invention, de gestion électrique des différents équipements participant à la fourniture de courant. Sur cette figure ne sont représentés que des équipements associés à un seul turboréacteur, mais d'autres équipements similaires sont bien évidemment associés à chacun des moteurs de l'aéronef.

Le turboréacteur représenté comporte classiquement un calculateur de régulation ECU qui pilote la position d'un doseur de carburant FMU pour réguler sa vitesse de rotation. L'arbre de rotation de ce turboréacteur entraîne mécaniquement une boîte d'entraînement des accessoires AGB qui porte, entre autres, un générateur à fréquence variable G1.

Au niveau de l'aéronef, on trouve, classiquement, un gestionnaire de l'alimentation électrique CONT qui a pour fonction de mettre en ou hors service les différents équipements qui tendent à fournir un courant électrique, alternatif ou continu, aux divers équipements qui consomment de l'énergie électrique. Ce gestionnaire d'alimentation est relié, tout d'abord, au calculateur du moteur ECU qui est susceptible de lui lancer une requête, notée décharge, pour le déclenchement d'un délestage et auquel il est capable de fournir un accusé de réception, désigné confirmation, et éventuellement de bonne exécution. Il est ensuite relié à des interrupteurs de transitoire du type de l'interrupteur B1 pour, d'une part, autoriser ou mettre fin à la fourniture de puissance par le super-condensateur SUP1 et A1 d'autre part pour autoriser ou mettre fin à la charge du super-condensateur pour le bus DC. Il est enfin raccordé au pilote GCU de ce générateur G1 pour que celui-ci se réactive, via l'envoi d'un courant d'excitation, après une mise hors service.

Les courants électriques tels que représentés sur la figure 2, qu'ils soient générés par le super-condensateur SUP1 ou par le générateur G1 via un convertisseur, sont ensuite mis à disposition du bus continu DC1 pour être récupérés, en fonction de leurs besoins, par les équipements de l'aéronef ou éventuellement par ceux du moteur.

La figure 4 montre l'évolution de la fourniture d'énergie électrique par les divers équipements de l'invention, au cours d'évolutions successives du régime du turboréacteur. La première courbe montre l'évolution dans le temps de la position de la manette de commande des gaz, que celle-ci soit pilotée par une auto-manette ou par le pilote, et les évolutions du régime du moteur qui en résultent. Elle correspond à une série de quatre accélérations rapides, allant du ralenti au plein gaz, suivies de décélérations rapides, les deux premières accélérations-décélérations étant effectuées immédiatement à la suite l'une de l'autre. Ces deux premiers cycles sont suivis postérieurement d'un cycle formé par une accélération avec stabilisation suivie d'une décélération, puis d'un cycle d'une accélération suivie immédiatement d'une décélération.

La seconde courbe correspond à la puissance prélevée sur le générateur à fréquence variable G1 au cours des différents cycles exposés ci-dessus. Cette puissance est mise à zéro pendant les phases d'accélération du régime du turboréacteur puis portée à 150% de la valeur maximale qu'il a en utilisation normale, au cours de la décélération qui suit. Une telle utilisation est en effet possible car les générateurs sont dimensionnés pour pouvoir fonctionner sur des périodes de l'ordre de cinq minutes à des ratios de l'ordre de 1,5 fois leur puissance nominale. L'invention propose donc de tirer partie de cette capacité en faisant délivrer par le générateur, au moins 120% et, préférentiellement, jusqu'à 150% de sa puissance nominale, pendant un temps inférieur à la trentaine de secondes, et préférentiellement inférieur à vingt secondes. Ainsi, il y a pendant cette durée, 50% en plus de la puissance, qui est disponible pour recharger les super-condensateurs. Après le temps passé dans cette utilisation au dessus de la puissance nominale, la puissance prélevée est ramenée à 100 % de sa valeur nominale si tant est que les super-condensateurs sont rechargés, tant qu'une nouvelle accélération rapide n'est pas demandée au turboréacteur.

La troisième courbe montre la puissance délivrée par les super-condensateurs pendant ces phases. Elle est égale tout le temps à zéro, sauf pendant les accélérations rapides. Au cours de celles-ci la puissance qu'ils délivrent est égale à 100% de la valeur nominale des générateurs à fréquence variable qu'ils ont pour mission de suppléer.

Enfin la quatrième courbe donne en fonction du temps l'énergie disponible dans le super-condensateur, compte tenu de sa décharge pendant la phase d'accélération et de sa recharge par le supplément de puissance prélevé sur les générateurs, postérieurement à l'accélération. La courbe indique en outre, en traits pointillés, la valeur de charge minimale à partir de laquelle peut être lancée une accélération avec arrêt du prélèvement de puissance sur le générateur VFG, sans que les équipements soient sous-alimentés. La présente illustration montre un dimensionnement du système où il n'est possible de lancer que deux accélérations complètes successives suivies de décélérations rapides.

On va maintenant décrire le fonctionnement d'un système, selon l'invention, de contrôle de l'alimentation en puissance électrique des équipements de l'aéronef consommateurs de courant continu.

Le déroulement d'un cycle d'accélération rapide, suivi d'une décélération rapide s'effectue de la façon suivante :

L'aéronef devant rester maître du contrôle du réseau électrique, le calculateur du moteur ne peut pas par lui-même influer sur le système de génération électrique. Il est donc prévu qu'il envoie une requête en ce sens au calculateur de gestion du réseau électrique CONT. Lorsqu'il est saisi, par l'auto-manette ou par le pilote, d'une demande d'effectuer une accélération, le calculateur moteur ECU analyse, à travers son contrôle de puissance, qu'il doit accélérer et il envoie une requête vers le contrôleur avion pour que celui-ci décharge le ou les générateurs électriques qui sont entraînés mécaniquement par le moteur. La puissance prélevée sur la turbomachine par le ou les générateurs électriques est alors nulle, ce qui déplace vers le bas le point de fonctionnement du moteur dans le diagramme du compresseur HP, ce qui contribue à satisfaire le besoin de marge au pompage de celui-ci.

L'invention prévoit de n'alimenter que le réseau DC pendant le temps du transitoire. Le calculateur de gestion de l'avion coupe alors le courant d'excitation des générateurs G1 et G2, et bascule en contrepartie la génération électrique continue sur les super-condensateurs SUP1 et SUP2 en actionnant les interrupteurs de transitoire B1 et B2. Ces super-condensateurs suppléent la fourniture de courant aux Bus DC1 et DC2, et in fine aux équipements, ceux-ci n'étant plus alimentés par les générateurs G1 et G2 au travers des convertisseurs CONV 1 et CONV 2.

Quand l'accélération est finie, le calculateur ECU du moteur envoie une information au gestionnaire CONT de l'avion, qui peut alors remettre en service les générateurs G1 et G2, en réactivant le courant d'excitation. On se retrouve alors dans la configuration normale, mais avec des super-condensateurs en partie déchargés.

Pour remédier à cela, le gestionnaire avion CONT commande, dès leur remise en service, aux générateurs de se mettre dans une configuration de fourniture d'une énergie égale à 150% de leur valeur nominale et il ferme les interrupteurs de rechargement A1 et A2. L'excédent de 50% de la puissance ainsi générée, qui n'est pas absorbée par les équipements consommateurs d'énergie électrique continue, passe dans le Bus Transitoire et vient recharger les super-condensateurs. Après un temps relativement court les super-condensateurs sont suffisamment rechargés pour permettre une série de deux accélérations consécutives et le gestionnaire avion peut arrêter la demande de fourniture exceptionnelle de puissance et ramener les générateurs G1 et G2 à leur valeur nominale de 100%.

Le principe de l'invention consiste ainsi à remplacer, pendant des phases transitoires du fonctionnement du moteur, appelées autrement par le raccourci « transitoires ». Les phases transitoires d'utilisation sont des phases au cours desquelles le moteur change de régime de fonctionnement. Ces phases transitoires sont particulièrement exigeantes pour le turboréacteur, la fourniture de puissance électrique continue, qui est assurée traditionnellement par des générateurs à fréquence variable ou non, par un système dédié ou non d'accumulation d'énergie électrique.

L'invention requiert une détection robuste du commencement des phases transitoires moteur afin d'anticiper le délestage de la puissance prélevée. Cette détection est réalisée par l'ECU en utilisant un changement dans la consigne de régime moteur (consigne moteur pour les corps haute pression/basse pression du moteur par exemple), celle-ci pouvant provenir soit de la manette pilote, soit de l'auto-manette, soit des consignes automatiques de changement de régime venant de l'ECU. Particulièrement, la détection est suffisamment rapide pour permettre un délestage du prélèvement de puissance sur le moteur avant l'accélération du moteur.

Le gestionnaire avion, formant le dispositif de délestage CONT commande, par action sur les interrupteurs de transitoire B1 et B2, un délestage des générateurs G1 et G2 pendant le transitoire, ce qui soulage pendant ce temps le fonctionnement de la turbomachine du fait de l'arrêt du prélèvement de puissance mécanique sur l'arbre. Le bus DC est alors alimenté, pendant la durée du transitoire, par des batteries ou des super-condensateurs dédiés SUP 1 et SUP 2.

Le délestage de la puissance mécanique prélevée sur le réacteur permet de réduire les contraintes sur la conception de la turbomachine, notamment sur le besoin en marge au pompage du compresseur lors des accélérations. Cela permet, en rendant possible une optimisation de la conception du compresseur, d'améliorer le rendement de compression, de réduire la taille du corps HP - dans le cas d'un prélèvement de puissance sur l'arbre HP - et donc de diminuer la consommation de carburant. Accessoirement cette évolution peut permettre également de réduire, marginalement, la masse du turboréacteur. Le bilan net en consommation de carburant par l'avion sur une mission est alors favorable, pour peu que le surcroît de masse induit par l'installation du système additionnel d'accumulation d'énergie électrique soit suffisamment faible.

La puissance électrique qui est fournie aux équipements de l'avion, ou du moteur, en lieu et place de celle des générateurs électriques, est apportée de préférence par des super-condensateurs qui représentent, dans la technologie actuelle, les meilleurs candidats en termes de densité d'énergie électrique disponible, avec des durées de décharge de d'ordre de la dizaine de secondes, ce qui est compatible des durées de fonctionnement transitoire des turboréacteurs.

Par ailleurs, comme on se propose alors de n'alimenter que le réseau DC pendant le temps du transitoire, il convient de remarquer que les charges qui sont traditionnellement placées sur le réseau alternatif - comme par exemple des plaques ou fours de cuisson, des dispositifs de dégivrage ou des réfrigérateurs - ont une inertie importante qui fait que leur constante de temps est largement supérieure au temps maximum du transitoire considéré. Ainsi l'interruption de leur alimentation électrique lors du transitoire considéré ne pose pas de problème particulier.

La quantité d'énergie stockée dans les super-condensateurs est limitée. Il convient donc de prévoir un dispositif de rechargement. Pour cela, le système d'accumulation d'énergie électrique est rechargé pendant la décélération du turboréacteur qui suit sa montée en régime, ou pendant un fonctionnement stabilisé. C'est le système normal de génération électrique qui est alors sollicité pour cette opération. Quand il y a de l'énergie disponible sur le Bus DC, les interrupteurs de rechargement A1 et A2 sont fermés pour recharger les super-condensateurs. Une stratégie de gestion des priorités est, à ce titre, mise en place dans le gestionnaire électrique de l'avion formant le dispositif de délestage CONT, pour ne pas alimenter les super-condensateurs au détriment de charges jugées plus importantes à cet instant.

Enfin, le délestage du prélèvement de la puissance mécanique sur l'arbre de rotation du turboréacteur pourrait permettre de diminuer le niveau de poussée au ralenti. Cela permettrait alors de réduire la consommation de carburant par l'avion, tout d'abord parce que le turboréacteur, tournant plus lentement, consomme moins en phase d'approche, et ensuite parce que le profil de la mission peut être optimisé en prenant en compte ce nouveau niveau de poussée.

L'invention a été décrite en déclenchant le délestage des générateurs et la mise en service des super-condensateurs au cours d'une accélération allant du ralenti au plein gaz. Elle peut tout aussi bien n'être mise en service qu'au cours d'accélérations allant d'un régime supérieur, ou égal, à celui du ralenti vers un régime inférieur, ou égal, à celui du plein gaz. Elle peut encore être mise en oeuvre sur des accélérations qui ne sont pas effectuées en réponse à des mouvements brutaux de la manette - c'est à dire des mouvements pour lesquels les taux d'accélération et de décélération du régime sont les taux maximum autorisés par le régulateur ECU et par les caractéristiques inertielles du rotor - mais à des accélérations qui soient simplement supérieures à un taux prédéfini.

En cas de besoin de surconsommation transitoire, pour un besoin en énergie supérieur au nominal pendant une courte phase, c'est à dire du même ordre de grandeur que les phases d'accélération d'environ 6 secondes, sur un générateur du système électrique avion, le dispositif selon l'invention permet avantageusement de limiter le prélèvement de puissance mécanique sur le moteur en privilégiant un prélèvement sur les super-capacités. Dans ce cas, les demandes de décharges telles que représentées sur la figures 3 peuvent être complétées par une demande provenant de la gestion des systèmes de l'avion. D'autres systèmes avion peuvent commander le gestionnaire d'alimentation électrique et donc en tirer profit. Le gestionnaire d'alimentation peut ainsi recevoir des commandes d'autres systèmes que le moteur pour initier une décharge.

Par exemple, dans les cas de surconsommation transitoire lié à l'utilisation des actuateurs avion, comme : la sortie des trains, volets ou des inverseurs, le dispositif permet avantageusement d'éviter un prélèvement de puissance augmenté sur le moteur.

## Revendications

1. Système de génération électrique pour l'alimentation en courant d'au moins un équipement pour un aéronef propulsé par une turbomachine, comprenant au moins une capacité de stockage électrique (BAT 1, BAT 2), au moins un générateur de courant (G1, G2) conformé pour être entraîné mécaniquement par un arbre de rotation de la turbomachine et des liaisons électriques entre ladite capacité de stockage électrique, ledit générateur et des équipements de l'aéronef pour alimenter lesdits équipements en courant, comprenant au moins un moyen alternatif de fourniture de courant (SUP 1, SUP 2) auxdits équipements, autonome vis-à-vis de tout entraînement mécanique par un arbre de rotation de la turbomachine, et un dispositif de délestage (CONT) apte à délester le ou lesdits générateurs et à mettre simultanément en service ledit moyen alternatif, **caractérisé en ce que** ledit dispositif de délestage (CONT) pour activer ledit délestage et mettre en service le moyen alternatif de fourniture du courant, est commandé par un paramètre de commande de la turbomachine ou par un paramètre de fonctionnement de la turbomachine.

2. Système de génération électrique selon la revendication 1 dans lequel le dispositif de délestage est activé par une commande d'augmentation du régime de la turbomachine.

3. Système de génération électrique selon la revendication 2 dans lequel le dispositif de délestage active ledit délestage et ladite mise en service alternative au cours d'une variation à la hausse de la vitesse de rotation de la turbomachine, la hausse de vitesse de rotation étant supérieure à une valeur prédéfinie.

4. Système de génération électrique selon la revendication 2 dans lequel ladite commande est une commande d'augmentation de régime entre le ralenti et le plein gaz.

5. Système de génération électrique selon l'une des revendications 1 à 4 dans lequel le moyen alternatif est un dispositif de stockage d'énergie électrique connecté à un bus de distribution de courant continu au travers d'un interrupteur (B1, B2).

6. Système de génération électrique selon la revendication 5 dans lequel le dispositif de stockage est formé par au moins un super-condensateur (SUP 1, SUP 2).

7. Système de génération électrique selon l'une des revendications 5 ou 6 dans lequel ledit dispositif de délestage (CONT) est conformé pour faire fonctionner, sur demande, le ou lesdits générateurs au-delà de leur fonctionnement nominal pour assurer le rechargement dudit dispositif de stockage.

8. Système de génération électrique selon la revendication 7 dans lequel ledit générateur fonctionne à un régime supérieur à 120% de sa valeur nominale dès l'arrêt de la mise en service dudit moyen alternatif.

9. Système de génération électrique selon la revendication 8 dans lequel ledit générateur fonctionne à un régime égal à 150% de sa valeur nominale pendant une durée inférieure à 30 secondes.

10. Turbomachine équipée d'un système de génération électrique selon l'une des revendications précédentes.

11. Turbomachine selon la revendication 10 dans laquelle la capacité dudit moyen alternatif et le fonctionnement en surrégime dudit générateur sont dimensionnés pour assurer en séquence deux cycles de fourniture de courant par ledit moyen alternatif et de rechargement par ledit générateur, lesdits deux cycles correspondant à une accélération du ralenti au plein gaz suivie immédiatement par une décélération du plein gaz au ralenti, les taux d'accélération et de décélération étant égaux aux taux maximum autorisés par la régulation.

## Patentansprüche

1. System zur Stromerzeugung zur Versorgung von mindestens einem Gerät für ein Flugzeug mit Strom, das von einer Turbomaschine angetrieben wird, wobei es mindestens eine elektrische Speicherkapazität (BAT 1, BAT 2), mindestens einen Stromgenerator (G1, G2), der angepasst ist, um mechanisch durch eine Drehwelle der Turbomaschine angetrieben zu werden, und elektrische Verbindungen zwischen der elektrischen Speicherkapazität, dem Generator und Geräten des Flugzeugs umfasst, um die Geräte mit Strom zu versorgen, wobei es mindestens ein alternierendes Mittel zur Versorgung (SUP 1, SUP 2) der Geräte mit Strom aufweist, das autonom gegenüber jedem mechanisch en Antrieb durch eine Drehwelle der Turbomaschine ist, und eine Vorrichtung zur Entlastung (CONT) umfasst, die angepasst ist, einen oder mehrere Generatoren zu entlasten und gleichzeitig das alternierende Mittel einzusetzen, **dadurch gekennzeichnet, dass** die Vorrichtung zur Entlastung (CONT), um die Entlastung zu aktivieren und das alternierende Mittel zur Versorgung mit Strom einzusetzen, von einem Befehlsparameter der Turbomaschine oder durch einen Funktionsparameter der Turbomaschine gesteuert wird.

2. System zur Stromerzeugung nach Anspruch 1, wobei die Vorrichtung zur Entlastung durch einen Befehl zur Erhöhung des Regimes der Turbomaschine aktiviert wird.

3. System zur Stromerzeugung nach Anspruch 2, wobei die Vorrichtung zur Entlastung die Entlastung und den alternierenden Einsatz während einer Variation des Anstiegs der Drehzahl der Turbomaschine aktiviert, wobei der Anstieg der Drehzahl höher als ein vorbestimmter Wert ist.

4. System zur Stromerzeugung nach Anspruch 2, wobei der Befehl ein Befehl zur Erhöhung des Regimes zwischen dem Leerlauf und dem Vollgas ist.

5. System zur Stromerzeugung nach einem der Ansprüche 1 bis 4, wobei das alternierende Mittel eine Vorrichtung zur Speicherung von elektrischer Energie ist, die mit einem Gleichstrom-Verteilerbus über einen Schalter (B1, B2) verbunden ist.

6. System zur Stromerzeugung nach Anspruch 5, wobei die Vorrichtung zur Speicherung durch mindestens einen Superkondensator (SUP 1, SUP 2) gebildet ist.

7. System zur Stromerzeugung nach einem der Ansprüche 5 oder 6, wobei die Vorrichtung zur Entlastung (CONT) angepasst ist, um auf Anfrage den einen oder die mehreren Generatoren über ihren Nennbetrieb zu betreiben, um das Laden der Vorrichtung zur Speicherung sicherzustellen.

8. System zur Stromerzeugung nach Anspruch 7, wobei der Generator bei einem Regime von mehr als 120 % des Nennwerts ab dem Stopp des Betriebs des alternierenden Mittels betrieben wird.

9. System zur Stromerzeugung nach Anspruch 8, wobei es bei einem Regime bis zu 150% des Nennwertes für eine Dauer von weniger als 30 Sekunden betrieben wird.

10. Turbomaschine, die mit einem elektrischen Generatorsystem gemäß einem der vorhergehenden Ansprüche ausgestattet ist.

11. Turbomaschine nach Anspruch 10, wobei die Kapazität des alternierenden Mittels und der Betrieb des Generators bei einer Überdrehzahl so dimensioniert sind, um nacheinander zwei Stromversorgungszyklen durch das alternierende Mittel und zur Aufladung durch den Generator sicherzustellen, wobei die zwei Zyklen einer Beschleunigung von dem Leerlauf zu Vollgas entsprechen, die unmittelbar von einer Abbremsung von Vollgas zu dem Leerlauf gefolgt wird, wobei die Quoten der Beschleunigung und der Abbremsung gleich den maximalen Quoten sind, die von der Regelung zugelassen sind.

## Claims

1. Electrical generation system for supplying electrical current to at least one item of equipment for an aircraft propelled by a turbine engine, comprising at least one electrical storage capacity (BAT 1, BAT 2), at least one current generator (G1, G2) designed to be driven mechanically by a rotation shaft of the turbine engine and electrical connections between said electrical storage capacity, said generator and items of equipment of the aircraft for supplying current to said items of said equipment, comprising at least one alternative means for supplying current (SUP 1, SUP 2) to said items of equipment, which is independent of any mechanical driving by a rotation shaft of the turbine engine, and a load shedding device (CONT) capable of shedding the load of the generator or generators and simultaneously bringing into service said alternative means, **characterised in that** said load shedding device (CONT), in order to activate said load shedding and to bring into service the alternative means of current supply, is controlled by a control parameter of the turbine engine or by an operating parameter of the turbine engine.

2. Electrical generation system according to claim 1, in which the load shedding device is activated by a command to increase the speed of the turbine engine.

3. Electrical generation system according to claim 2, in which the load shedding device activates said load shedding and said alternative bringing into service during an upward variation in the rotation speed of the turbine engine, the increase in the rotation speed being greater than a predefined value.

4. Electrical generation system according to claim 2, in which said command is a command for increasing the speed between idling and full speed.

5. Electrical generation system according to one of claims 1 to 4, in which the alternative means is an electrical energy storage device connected to a DC distribution bus via a switch (B1, B2).

6. Electrical generation system according to claim 5, in which the storage device is formed by at least one supercapacitor (SUP 1, SUP 2).

7. Electrical generation system according to one of claims 5 or 6, in which said load shedding device (CONT) is designed for operating the generator or generators, on request, beyond the rated operation thereof, in order to provide recharging of said storage device.

8. Electrical generation system according to claim 7, in which said generator operates at a speed greater than 120% the rated value thereof once said alternative means is brought into service.

9. Electrical generation system according to claim 8, in which said generator operates at a speed equal to 150% of the rated value thereof, for a period of less than 30 seconds.

10. Turbine engine equipped with an electrical generation system according to one of the preceding claims.

11. Turbine engine according to claim 10, in which the capacity of the alternative means and the operation at overspeed of said generator are dimensioned to provide in sequence two current supply cycles by said alternative means and recharging of said generator, said two cycles corresponding to an acceleration from idling to full speed followed immediately by a deceleration from full speed to idling, the rates of acceleration and deceleration being equal to the maximum rate authorised by the regulation.
